# EUROPÄISCHE PATENTSCHRIFT

(11) **EP 2 586 641 B1**
(45) Veröffentlichungstag und Bekanntmachung des Hinweises auf die Patenterteilung: **14.05.2014**
(21) Anmeldenummer: 12181390.1
(22) Anmeldetag: 22.08.2012
(51) Int. Cl.: B60K 17/28, F16D 25/12, F16H 57/04

(54) **Zapfwellengetriebe**
PTO shaft drive
Engrenage d'arbre de prise de force

(30) Priorität: 26.10.2011 DE 102011085255
(43) Veröffentlichungstag der Anmeldung: 01.05.2013
(73) Patentinhaber: DEERE & COMPANY, Moline, Illinois 61265-8098 (US)
(72) Erfinder: Vergara, Daniel, 28850 Madrid (ES); Torres, Juan Antonio J, 28032 Madrid (ES)
(74) Vertreter: Reichert, Christian

(56) Entgegenhaltungen:
- EP-A1- 0 397 990
- EP-A2- 1 630 030
- US-A1- 2005 172 740

## Beschreibung

Die Erfindung betrifft ein Zapfwellengetriebe mit einer Zapfwellenkupplung, einer Hydraulikversorgung und einem hydraulisch betätigbaren Kolben zum Aktivieren eines Kupplungsscheibenpakets der Zapfwellenkupplung, wobei die Hydraulikversorgung eine Hydraulikpumpe, ein Hydraulikreservoir und einen Hydraulikkühler umfasst, eine erste Hydraulikleitung die Hydraulikpumpe mit dem Kolben und eine zweite Hydraulikleitung die Hydraulikpumpe mit dem Hydraulikkühler verbindet, wobei die Hydraulikversorgung eine dritte Hydraulikleitung umfasst, welche den Hydraulikkühler mit dem Kupplungsscheibenpaket hydraulisch verbindet, wobei das Kupplungsscheibenpaket mit dem Hydraulikreservoir hydraulisch in Verbindung steht. Ein derartiges Zapfenwellengetriebe ist aus EP1630030 A bekannt.

Zapfwellengetriebe werden unter anderem bei landwirtschaftlichen Fahrzeugen, beispielsweise Schlepper oder Traktoren, aber auch bei Baumaschinen und Nutzfahrzeugen eingesetzt, um den Antrieb einer vom Antriebsmotor des entsprechenden Fahrzeugs angetriebenen Zapfwelle bereitzustellen. Mittels der Zapfwelle können an das entsprechende Fahrzeug angebaute oder angehängte Geräte mechanisch angetrieben werden. Die Zapfwellengetriebe verfügen in der Regel über eine hydraulisch betätigbare Kupplung, über welche die Zapfwelle mit der Antriebswelle des Zapfwellengetriebes in Antriebsverbindung gebracht werden kann. Die Antriebswelle steht in der Regel mit dem Antriebsmotor des Fahrzeugs oder mit einer mit dem Antriebsmotor in Verbindung stehendem Antriebsstrang in Verbindung. Die hydraulische Kupplung des Zapfwellengetriebes verfügt üblicherweise über ein Kupplungsscheibenpaket, welches über Druckbeaufschlagung eines hydraulisch betätigbaren Ringkolbens in Reibverbindung gebracht wird und damit aktiviert bzw. geschlossen werden kann, so dass ein von der Antriebswelle geliefertes Antriebsmoment auf die Zapfwelle übertragen wird. Beim Betreiben des Zapfwellengetriebes, insbesondere auch bei Betätigen der Kupplung, das heißt bei Druckbeaufschlagung des Ringkolbens und dadurch bedingte Herbeiführung der Reibverbindungen im Kupplungsscheibenpaket erwärmt sich die Kupplung und auch andere Getriebekomponenten. Es entsteht somit Wärme, die über die Hydraulikflüssigkeit, welche sowohl zum Betreiben der Kupplung, als auch zur Schmierung der Getriebekomponenten dient, abzuführen ist. Dazu verfügt ein derartiges Zapfwellengetriebe in der Regel über eine entsprechende Hydraulikversorgung bzw. hydraulische Anordnung, die einen Hydraulikkühler umfasst, wobei die Hydraulikflüssigkeit kontinuierlich zirkuliert und mittels einer Hydraulikpumpe aus einem Hydraulikreservoir bzw. aus einem Getriebesumpf durch den Hydraulikkühler gepumpt wird.

Es ist bekannt, eine derartige Hydraulikversorgung derart auszubilden, dass eine erste Hydraulikleitung die Hydraulikpumpe mit dem Kolben und eine zweite, von der ersten Hydraulikleitung abzweigende Hydraulikleitung, die Hydraulikpumpe mit dem Hydraulikkühler verbindet, wobei eine hydraulische Versorgung des Ringkolbens über ein Proportionalventil gesteuert wird und parallel dazu eine kontinuierliche Zirkulation der Hydraulikflüssigkeit durch den Hydraulikkühler über ein in der zweiten Hydraulikleitung angeordnetes Druckbegrenzungsventil realisiert wird. Die Kühlung des Kupplungsscheibenpakets erfolgt durch Schmierung mit der gekühlten Hydraulikflüssigkeit, bzw. dadurch, dass das Kupplungscheibenpaket mit dem Sumpf des Getriebes in Verbindung steht. Eine derartige Kühlung weist jedoch eine relativ geringe Kühlkapazität auf und kann eine Wärmeabfuhr nur bis zu einem bestimmten Maß gewährleisten. Insbesondere bei leistungsstärkeren Getrieben wird es dann erforderlich größere Kupplungen bzw. Kupplungsscheibenpakete einzusetzen, um die benötigte Wärmeabfuhr zu gewährleisten. Dies steht den gängigen Bestrebungen hinsichtlich geringer Baugröße und höheren Leistungen entgegen.

Um die Kühlungskapazitäten zu verbessern, wurde vorgeschlagen, dass zusätzliche Kühlkreisläufe geschaffen werden, die eine Kühlung des Getriebes bzw. der Kupplung durch gesonderte Kanäle in den entsprechenden Bauteilen und mit einem von der hydraulischen Versorgung für den Kolben zur Aktivierung der Kupplung getrennten Hydraulikkreis ermöglichen. Dies wiederum ist konstruktiv aufwändig, teile- und kostenintensiv.

Die der Erfindung zugrunde liegende Aufgabe wird darin gesehen, ein Zapfwellengetriebe der eingangs genannten Art anzugeben, durch welches die vorgenannten Probleme überwunden werden. Insbesondere soll die Kühlkapazität verbessert werden, ohne den konstruktiven Aufwand wesentlich zu erhöhen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Zapfwellengetriebe der eingangs genannten Art derart ausgebildet, dass ferner eine Antriebswelle enthalten ist, auf welcher der Kolben gelagert ist, wobei die erste Hydraulikleitung einen wenigstens teilweise in der Antriebswelle ausgebildeten und zu dem Kolben führenden ersten Hydraulikkanal umfasst und auf welcher die Zapfwellenkupplung gelagert ist, wobei die dritte Hydraulikleitung einen wenigstens teilweise in der Antriebswelle ausgebildeten und zu dem Kupplungsscheibenpaket führenden zweiten Hydraulikkanal umfasst.. Dadurch, dass die durch den Hydraulikkühler abgekühlte Hydraulikflüssigkeit direkt in das Kupplungsscheibenpaket geleitet wird, kann eine direkte Kühlung der Kupplungsscheiben erfolgen. Ohne die Größe des Kupplungsscheibenpakets zu erhöhen wird dadurch die Kühlkapazität erhöht. Gleichzeitig wird auf die bereits vorhandene Hydraulikversorgung zurückgegriffen, so dass kein separat versorgter Kühlkreislauf geschaffen wird. Insgesamt können aufgrund der verbesserten Kühlkapazität ohne höheren Teile- und Konstruktions- bzw. Bauaufwand leistungsstärkere Getriebe bei gleicher Baugröße bzw. leistungsgleiche Getriebe mit geringerer Baugröße realisiert werden. Durch Variieren des von der Hydraulikpumpe geförderten Hydraulikdrucks, bzw. durch Variieren der Pumpleistung kann zudem nach Bedarf auch die Kühlkapazität effektiv und wirksam erhöht bzw. verringert werden. Durch die verbesserte Kühlkapazität des Gesamtsystems wird auch die Lebensdauer entscheidend erhöht. Das Zapfwellengetriebe ist derart ausgebildet, dass der Kolben auf einer Antriebswelle des Zapfwellengetriebes gelagert ist, wobei die erste Hydraulikleitung einen wenigstens teilweise in der Antriebswelle ausgebildeten und zu dem Kolben führenden ersten Hydraulikkanal umfasst bzw. mit diesem hydraulisch verbunden ist. Der Hydraulikkanal kann beispielsweise durch eine oder mehrere sich aneinander anschließende Bohrungen ausgebildet sein, die sich durch ein Inneres der Antriebswelle erstrecken. Vorzugsweise weist dieser Kanal einen axial zur Antriebswelle verlaufenden und einen radial zur Antriebswelle verlaufenden Bereich auf, wobei der Kanal vorzugsweise an einem Ende in einen Endbereich der Antriebswelle und am anderen Ende in einen Bereich auf dem der Kolben gelagert ist führt. Das Zapfwellengetriebe ist ferner derart ausgebildet, dass eine Antriebswelle enthalten ist, auf welcher die Zapfwellenkupplung gelagert ist, wobei die dritte Hydraulikleitung einen wenigstens teilweise in der Antriebswelle ausgebildeten und zu dem Kupplungsscheibenpaket führenden zweiten Hydraulikkanal umfasst bzw. mit diesem hydraulisch verbunden ist. Der Hydraulikkanal kann beispielsweise durch eine oder mehrere sich aneinander anschließende Bohrungen ausgebildet sein, die sich durch ein Inneres der Antriebswelle erstrecken. Vorzugsweise weist dieser Kanal einen axial zur Antriebswelle verlaufenden und einen radial zur Antriebswelle verlaufenden Bereich auf, wobei der zweite Hydraulikkanal vorzugsweise an einem Ende in einen Endbereich der Antriebswelle und am anderen Ende in einen Bereich auf dem die Zapfwellenkupplung gelagert und insbesondere das Kupplungsscheibenpaket angeordnet ist führt.

In der ersten Hydraulikleitung kann ein erstes Hydraulikventil zum Steuern einer hydraulischen Versorgung des Kolbens und in der zweiten Hydraulikleitung ein zweites Hydraulikventil angeordnet sein. Die zweite Hydraulikleitung kann direkt von der ersten Hydraulikleitung abgezweigt werden, so dass auch die Integration beider Ventile in einem kombinierten Ventilblock prinzipiell möglich ist. Das in der ersten Hydraulikleitung angeordnete erste Hydraulikventil dient zur Steuerung der Versorgung des zur Aktivierung des Kupplungsscheibenpakets angeordneten Kolbens, vorzugsweise Ringkolben. Das Hydraulikventil stellt dabei eine Versorgung derart dar, dass in einer ersten Schaltstellung die von der Hydraulikpumpe geförderte Hydraulikflüssigkeit über eine Abflussleitung in die zweite Hydraulikleitung geleitet wird, wobei die Einleitung in die zweite Hydraulikleitung hinter bzw. stromabwärts des zweiten Hydraulikventils erfolgt. In einer zweiten Schaltstellung wird die Hydraulikflüssigkeit direkt in den Kolben geleitet. Zwischenstellungen zwischen diesen beiden extremen Schaltstellungen sind dabei ebenfalls möglich.

Das zweite Hydraulikventil ist als Druckbegrenzungsventil ausgebildet, welches bei Erreichen eines vorgebbaren Hydraulikdrucks in Öffnungsstellung verbracht wird. In einem Hydraulikzustand, in dem der Druck in der zweiten Hydraulikleitung unterhalb des vorgegebenen Hydraulikdrucks ist, ist das zweite Hydraulikventil in einer Schließstellung, was beispielsweise durch eine Stellfeder auf der Schließstellungsseite des zweiten Hydraulikventils erreicht wird. Dieser Hydraulikzustand stellt sich vorzugsweise ein, wenn sich das erste Hydraulikventil in der ersten Schaltstellung befindet. Erst wenn die Hydraulikflüssigkeit durch Ansteuern des ersten Hydraulikventils in die zweite Schaltstellung in den Kolben geleitet wird, steigt auch der Hydraulikdruck in der zweiten Hydraulikleitung an, bis schließlich der vorgebbare Hydraulikdruck erreicht und das Druckbegrenzungsventil in die Öffnungsstellung bewegt wird. Dies kann über eine Steuerdruckleitung, die vor bzw. stromaufwärts des zweiten Hydraulikventils von der zweiten Hydraulikleitung in die Öffnungsseite des zweiten Hydraulikventils führt, umgesetzt werden, wobei die Steuerdruckleitung der Stellfeder entgegengewirkt, so dass bei Erreichen des vorgebbaren Hydraulikdrucks die Stellfeder nachgibt. Je nach Ausbildung bzw. Einstellung der Stellfeder kann der vorgebbare Hydraulikdruck, zu welchem das zweite Hydraulikventil in die Öffnungsstellung verbrachte werden soll, eingestellt werden. Hier sind auch andere Druckbegrenzungsvarianten denkbar, beispielsweise durch Einsatz eines federvorgespannten Rückschlagventils.

Das erste Hydraulikventil kann als elektromagnetisch betätigbares 4/2-Wege Proportionalventil ausgebildet ist. Damit sind auch Stellungen zwischen den oben genannten extremen Schaltstellungen einstellbar. Das Proportionalventil kann über eine elektromagnetische Spule, welche in einem bestromten Zustand, elektromagnetisch gegen eine Stellfeder wirkt, elektrisch geschaltet bzw. angesteuert werden.

Der zweite Hydraulikkanal ist wenigstens teilweise in der Zapfwellenkupplung ausgebildet und kann, ausgehend von der Antriebswelle, in mehreren angeordneten Teilkanälen zum Kupplungsscheibenpaket führen. Die Teilkanäle können teilweise parallel ausgerichtet sein und sich von einem axial verlaufenden Teilkanal radial in das Kupplungsscheibenpaket erstrecken. Dadurch kann die Kühlung durch die Hydraulikflüssigkeit gezielter verteilt bzw. eingeleitet werden, so dass die Kupplungsscheiben effektiver gekühlt werden.

Das Zapfwellengetriebe ist ferner derart ausgebildet, dass das Hydraulikreservoir wenigstens teilweise als Zapfwellengetriebesumpf ausgebildet ist, so dass die durch das Kupplungsscheibenpaket geleitete Hydraulikflüssigkeit in den Getriebesumpf fließt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Querschnittansicht eines erfindungsgemäßen Zapfwellengetriebes und
- Fig. 2: ein Schaltbild einer Hydraulikversorgung für das in Figur 1 dargestellte Zapfwellengetriebe.

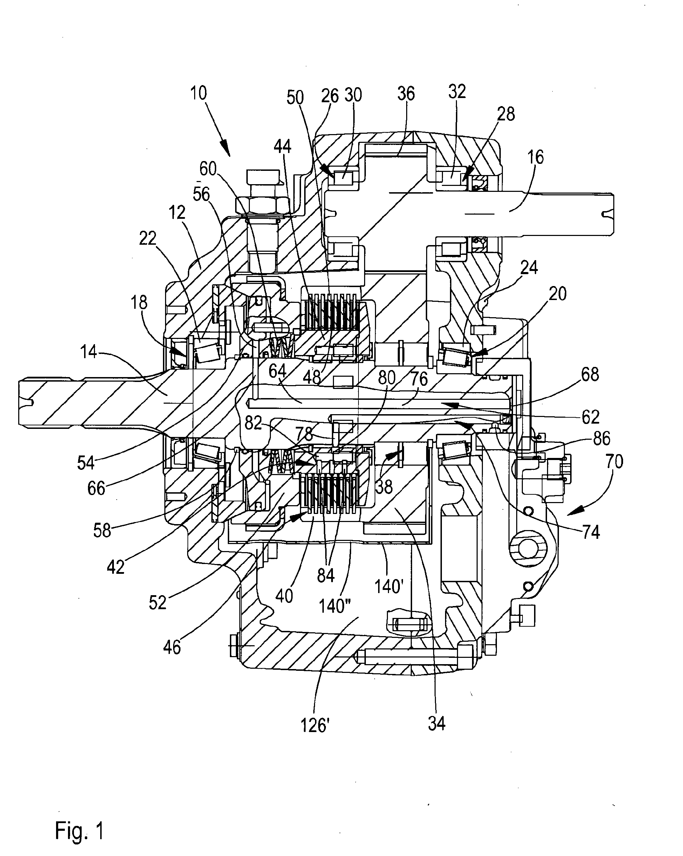

Wie in Figur 1 dargestellt ist, umfasst ein Zapfwellengetriebe 10 ein Getriebegehäuse 12, in dem eine Antriebswelle 14 und eine als Zapfwelle ausgebildete Ausgangswelle 16 gelagert sind. Die Antriebswelle ist an einer ersten Lagerstelle 18 und an einer zweiten Lagerstelle 20 jeweils mit einem Wälzlager 22, 24 am Gehäuse 12 gelagert. Die Ausgangswelle 16 ist an einer dritten Lagerstelle 26 und an einer vierten Lagerstelle 28 jeweils mit einem Wälzlager 30, 32 am Gehäuse 12 gelagert.

Auf der Antriebswelle 14 ist ein Antriebszahnrad 34 angeordnet, welches mit einer auf der Ausgangswelle 16 ausgebildeten Verzahnung 36 in Eingriff steht. Das Antriebszahnrad 34 ist auf der Antriebswelle 14 mittels einer Wälzlageranordnung 38 gelagert und über einen Kupplungskranz 40 mit einer als Lamellenkupplung oder Scheibenkupplung ausgebildeten Zapfwellenkupplung 42 verbunden. Die Zapfwellenkupplung 42 umfasst einen mit der Antriebswelle 14 drehfest verbundenen Kupplungsträger 44, sowie ein Kupplungsscheibenpaket 46, welches antriebswellenseitig auf dem Kupplungsträger 44 gelagerte Kupplungsscheiben 48 und antriebszahnradseitig auf dem Kupplungskranz 40 gelagerte Kupplungsscheiben 50 umfasst.

Ferner ist ein hydraulisch betätigbarer Kolben 52 zur Betätigung bzw. zum Aktivieren des Kupplungsscheibenpakets 46 angeordnet. Der Kolben 52 ist als Ringkolben ausgebildet und axial verschiebbar auf der Antriebswelle 14 und auf einem Kolbenträger 54 gelagert. Zwischen dem Kolben 52 und dem Kolbenträger 54 ist ein Druckraum 56 ausgebildet. Der Kolbenträger 54 ist über einen Sicherungsring 58 axial auf der Antriebswelle 14 gesichert. Zwischen dem Kolben 52 und dem Kupplungsträger 44 erstreckt sich eine Tellerfederanordnung 60, die den Kolben 52 gegen den Kolbenträger 54 vorspannt. Zum Aktivieren der Zapfwellenkupplung bzw. des Kupplungsscheibenpakets 46 wird der Druckraum 56 über einen ersten Hydraulikkanal 62 mit Hydraulikflüssigkeit beaufschlagt. Der erste Hydraulikkanal 62 ist als Axialbohrung 64, an die sich eine Radialbohrung 66 anschließt, im Inneren der Antriebswelle 14 ausgebildet. Die Radialbohrung 66 führt von der Axialbohrung 64 aus in einen Bereich des Druckraums 56. Die Axialbohrung 64 verbindet die Radialbohrung 66 mit einem Endbereich 68 der Antriebswelle 14. Der Endbereich der Antriebswelle 14 steht in hydraulischer Verbindung zu einem Hydraulikventilblock 70, der einen Teil einer Hydraulikversorgung 72 des Zapfwellengetriebes 10 darstellt.

Die Antriebswelle 14 umfasst ferner einen zweiten Hydraulikkanal 74. Der zweite Hydraulikkanal 74 ist zum Einen ebenfalls als Axialbohrung 76, an die sich eine Radialbohrung 78 anschließt, im Inneren der Antriebswelle 14 ausgebildet, wobei die Radialbohrung 78 des Weiteren von der Axialbohrung 76 aus in einen Bereich des Kupplungsträgers 44 führt. Zum Anderen ist der zweite Hydraulikkanal 74 im Kupplungsträger 44 ausgebildet, als eine weitere Radialbohrung 80, die in eine weitere Axialbohrung 82 mündet. Abschließend erstrecken sich im zweiten Hydraulikkanal 74 ausgehend von der Axialbohrung 82 einzelne weitere Radialbohrungen 84, die in das Kupplungsscheibenpaket 46 münden. Die Axialbohrung 82 im Inneren des Kupplungsträgers 44 zusammen mit den weiteren Radialbohrungen 84 bilden eine Art Verteiler. Die Axialbohrung 76 im Inneren der Antriebswelle 14 verbindet die Radialbohrung 78 auch hier mit dem Endbereich 68 der Antriebswelle 14, in dem eine weitere Radialbohrung 86 zum Anschluss an die Hydraulikversorgung 72 bzw. an den Hydraulikventilblock 70 ausgebildet ist.

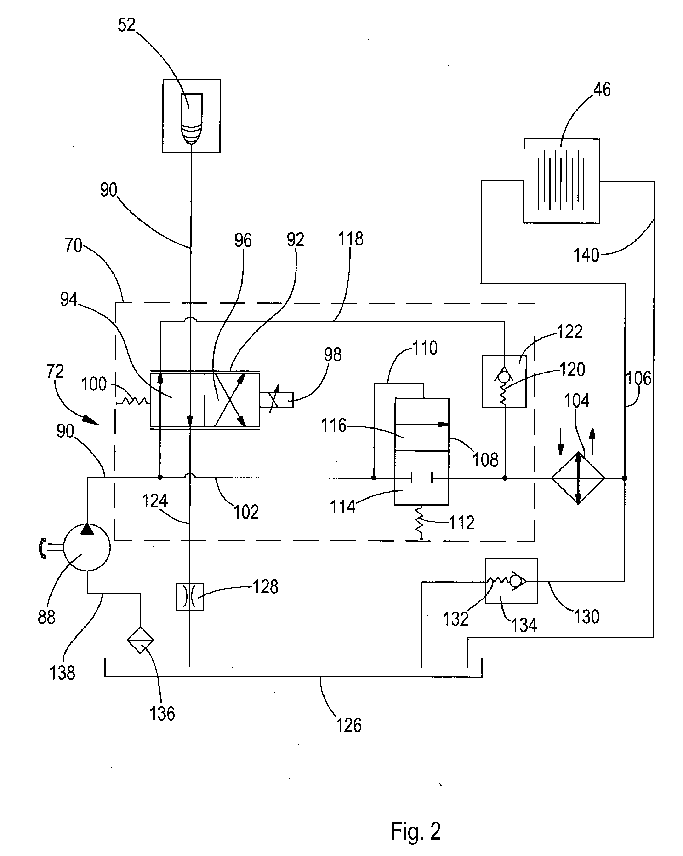

Die Hydraulikversorgung 72 des Zapfwellengetriebes 10, die zum Einen zum hydraulischen Betreiben bzw. Betätigen und zum Anderen zum Schmieren und Kühlen des Zapfwellengetriebes 10 eingesetzt wird, ist detailliert in Figur 2 dargestellt. Sie umfasst neben dem Hydraulikventilblock 70 eine mechanisch angetriebene Hydraulikpumpe 88, welche über eine Antriebsverbindung (nicht gezeigt) von der Antriebswelle 14 des Zapfwellengetriebes 10 angetrieben wird. Ausgehend von der Hydraulikpumpe 88 erstreckt sich eine erste Hydraulikleitung 90, die über ein als 4/2-Wege-Proportionalventil ausgebildetes erstes Hydraulikventil 92 zum Kolben 52 führt, wobei die Hydraulikversorgung des Kolbens 52 in einer Schließstellung 94 unterbrochen (Schaltstellung wie in Figur 2 dargestellt) und in einer Öffnungsstellung 96 hergestellt wird. Durch eine elektromagnetisch ansteuerbare Magnetspule 98, die entgegen einer Stellfeder 100 wirkt kann das erste Hydraulikventil 92 von der Schließstellung 94 in die Öffnungsstellung 96 und in entsprechend dazwischenliegende Schaltstellungen bewegt werden. Von der ersten Hydraulikleitung 90 zweigt stromaufwärts des ersten Hydraulikventils 92 eine zweite Hydraulikleitung 102 ab, die in einen Hydraulikkühler 104 führt und somit die Hydraulikpumpe 88 mit dem Hydraulikkühler 104 verbindet. Ferner ist eine dritte Hydraulikleitung 106 vorgesehen, die den Hydraulikkühler mit dem Kupplungsscheibenpaket 46 verbindet. Stromaufwärts vom Hydraulikkühler 104 ist in der zweiten Hydraulikleitung 102 ein als Druckbegrenzungsventil ausgebildetes zweites Hydraulikventil 108 angeordnet, welches über eine Steuerdruckleitung 110 entgegen einer Stellfeder 112 von einer Schließstellung 114 (Schaltstellung wie in Figur 2 dargestellt) in eine Öffnungsstellung 116 verbracht werden kann, sobald sich ein vorgebbarer Druckwert in der zweiten Hydraulikleitung 102 einstellt. Der vorgebbare Druckwert kann dabei durch Einstellen oder Ausbildung der Stellfeder 112 entsprechend vorgegeben werden. Eine erste Abflussleitung 118 führt vom ersten Hydraulikventil 92 aus in die zweite Hydraulikleitung 102, zwischen Hydraulikkühler 104 und zweitem Hydraulikventil 108. In der ersten Abflussleitung 114 ist ein entgegen einer Stellfeder 120 stromabwärts öffnendes Rückschlagventil 122 angeordnet. Eine zweite Abflussleitung 124 verbindet das erste Hydraulikventil 92 mit einem Hydraulikreservoir 126. Der Abfluss von Hydraulikflüssigkeit in der zweiten Abflussleitung 124 wird durch eine dort angeordnete Drossel oder Blende 128 gedrosselt. Ausgehend von der dritten Hydraulikleitung 106 erstreckt sich eine dritte Abflussleitung 130, die über ein entgegen einer Stellfeder 132 stromabwärts öffnendes Rückschlagventil 134, in das Hydraulikreservoir 126 führt. Über ein Hydraulikfilter 136 kann mittels einer Ansaugleitung 138 von der Hydraulikpumpe 88 Hydraulikflüssigkeit aus dem Hydraulikreservoir 126 angesaugt und zur Druckversorgung des Kolbens 52 und zur Kühlung und Schmierung des Zapfwellengetriebes 10 bzw. der Zapfwellenkupplung 42 und des Kupplungsscheibenpakets 46 gefördert werden. Eine weitere hydraulische Verbindung 140 ist zwischen dem Kupplungsscheibenpaket 46 und dem Hydraulikreservoir 126 ausgebildet. Wie in Figur 1 zu sehen ist, ist das Hydraulikreservoir 126 als Zapfwellengetriebesumpf 126` ausgebildet, welcher über eine in einem Trennblechblech 140` unterhalb der Zapfwellenkupplung 42 ausgebildeten Öffnung 140" mit der Zapfwellenkupplung 42 hydraulisch in Verbindung steht, so dass die Hydraulikflüssigkeit aus der Zapfwellenkupplung 42 heraus in den Zapfwellengetriebesumpf 126` strömen kann. Die in Figur 2 dargestellte hydraulische Verbindung 140 stellt somit die in Figur 1 mit einer Öffnung 140" versehene Anordnung eines Trennbleches 140' dar. Wie aus Figur 2 hervorgeht, sind das erste Hydraulikventil 92, die erste Abflussleitung 118, das Rückschlagventil 122 und das zweite Hydraulikventil 108 in dem Hydraulikventilblock 70 ausgebildet und werden gemeinsam als hydraulische Ventilkombination am Getriebegehäuse 12 angeflanscht (siehe Figur 1).

Wie insbesondere aus einer Zusammenschau der Figur 1 und der Figur 2 hervorgeht, wird der in Figur 2 dargestellte erste Hydraulikkanal 62, der die Axialbohrung 64 und die Radialbohrung 66 enthält, von der ersten Hydraulikleitung 90 umfasst, die die Hydraulikpumpe 88 mit dem Kolben 52 verbindet. Ferner wird der in Figur 2 dargestellte zweite Hydraulikkanal 74, der zum einen die Axialbohrung 76 und die Radialbohrungen 78 und 86 und zum anderen die Radialbohrung 80, die Axialbohrung 82 sowie die einzelnen Radialbohrungen 84 enthält, von der dritten Hydraulikleitung 106 umfasst, die den Hydraulikkühler 104 mit dem Kupplungsscheibenpaket 46 verbindet.

Insgesamt wird folgender Effekt durch das im Ausführungsbeispiel dargestellte Zapfwellengetriebe 10 mit Hydraulikversorgung 72 erzielt: Die Hydraulikpumpe 88 fördert Hydraulikflüssigkeit aus dem Hydraulikreservoir 126 bzw. aus Zapfwellengetriebesumpf 126`. Über die erste Hydraulikleitung 90, welche den ersten Hydraulikkanal 62 mit umfasst, gelangt Hydraulikflüssigkeit in den Kolben, sofern das erste Hydraulikventil 92 in eine Öffnungsstellung 96 gesteuert wird. Die Hydraulikflüssigkeit gelangt unter Druck in den Druckraum 56 des Kolbens 52, wodurch dieser druckbeaufschlagt wird und in Richtung des Kupplungsscheibenpakets 46, zur Aktivierung desselben, bewegt wird. die Kupplungsscheiben 48, 50 treten in Reibverbindung und stellen eine Antriebsverbindung zwischen dem Antriebszahnrad 34 und der Ausgangswelle 16 her. Gleichzeitig wird Hydraulikflüssigkeit durch das Druckbegrenzungsventil 108 geleitet, welches aufgrund des ansteigenden Drucks in der ersten und zweiten Hydraulikleitung 90, 102 in die Öffnungsstellung gesteuert wird. Die Hydraulikflüssigkeit strömt über die zweite Hydraulikleitung 102, welche den zweiten Hydraulikkanal 74 mit umfasst, in das Kupplungsscheibenpaket 46, welches dadurch Kühlung und Schmierung erfährt. Von dort aus gelangt die Hydraulikflüssigkeit über eine hydraulische Verbindung 140, welche in Figur 1 als einfache Öffnung 140" zwischen Zapfwellenkupplung 42 und Zapfwellengetriebesumpf 126' hergestellt wird, in das Hydraulikreservoir 126 bzw. in den Zapfwellengetriebesumpf und der Kreislauf beginnt von vorn. Für den Fall, dass das erste Hydraulikventil 92 in eine Schließstellung gesteuert wird, strömt Hydraulikflüssigkeit über die erste Abflussleitung 118 durch den Kühler 104 und von dort aus, wie bereits beschrieben, in das Kupplungsscheibenpaket 46 und weiter zurück in das Hydraulikreservoir 126 bzw. in den Zapfwellengetriebesumpf 126`. Das zweite Hydraulikventil 108 bleibt in diesem Fall in Schließstellung 114, da sich kein entsprechender Druck aufbauen kann, der es in Öffnungsstellung 116 steuern würde. Ein Rest an Hydraulikflüssigkeit kann aus den Druckraum 56 heraus durch die zweite Abflussleitung 124 heraus in das Hydraulikreservoir 126 abfließen. Somit ist unabhängig von einer hydraulischen Ansteuerung bzw. Druckbeaufschlagung des Kolbens in beiden dargestellten hydraulischen Betriebszuständen des Zapfwellengetriebes gewährleistet, dass die Zapfwellenkupplung Schmierung und Kühlung erfährt.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Zapfwellengetriebe (10) mit einer Zapfwellenkupplung (42), einer Hydraulikversorgung (72), einem hydraulisch betätigbaren Kolben (52) zum Aktivieren eines Kupplungsscheibenpakets (46) der Zapfwellenkupplung (42), wobei die Hydraulikversorgung (72) eine Hydraulikpumpe (88), ein Hydraulikreservoir (126, 126`) und einen Hydraulikkühler (104) umfasst und wobei eine erste Hydraulikleitung (90) die Hydraulikpumpe (88) mit dem Kolben (52) und eine von der ersten Hydraulikleitung (90) abzweigende zweite Hydraulikleitung (102) die Hydraulikpumpe (88) mit dem Hydraulikkühler (104) hydraulisch verbindet, wobei die Hydraulikversorgung (72) eine dritte Hydraulikleitung (106) umfasst, welche den Hydraulikkühler (104) mit dem Kupplungsscheibenpaket (46) hydraulisch verbindet, wobei das Kupplungsscheibenpaket (46) mit dem Hydraulikreservoir (126, 126`) hydraulisch in Verbindung steht, **dadurch gekennzeichnet, dass** ferner eine Antriebswelle (14) enthalten ist, auf welcher der Kolben (52) gelagert ist, wobei die erste Hydraulikleitung (90) einen wenigstens teilweise in der Antriebswelle (14) ausgebildeten und zu dem Kolben führenden ersten Hydraulikkanal (62) umfasst und auf welcher die Zapfwellenkupplung (42) gelagert ist, wobei die dritte Hydraulikleitung (106) einen wenigstens teilweise in der Antriebswelle (14) ausgebildeten und zu dem Kupplungsscheibenpaket führenden zweiten Hydraulikkanal (74) umfasst.

2. Zapfwellengetriebe (10) nach Anspruch 1, **dadurch gekennzeichnet, dass** in der ersten Hydraulikleitung (90) ein erstes Hydraulikventil (92) zum Steuern einer hydraulischen Versorgung des Kolbens (52) und in der zweiten Hydraulikleitung (102) ein zweites Hydraulikventil (108) angeordnet ist.

3. Zapfwellengetriebe (10) nach Anspruch 2, **dadurch gekennzeichnet, dass** das zweite Hydraulikventil (108) als Druckbegrenzungsventil ausgebildet ist, welches bei Erreichen eines vorgebbaren Hydraulikdrucks in Öffnungsstellung (116) verbracht wird.

4. Zapfwellengetriebe (10) nach einem der Ansprüche 1 bis 3, **dadurch gekennzeichnet, dass** das erste Hydraulikventil (92) als elektromagnetisch betätigbares 4/2-Wege Proportionalventil ausgebildet ist.

5. Zapfwellengetriebe (10) nach einem der Ansprüche 1 bis 4, **dadurch gekennzeichnet, dass** der zweite Hydraulikkanal (74) wenigstens teilweise in der Zapfwellenkupplung (42) ausgebildet ist und ausgehend von der Antriebswelle (14) in mehreren angeordneten Teilkanälen (80, 82, 84) zum Kupplungsscheibenpaket (46) führt.

6. Zapfwellengetriebe (10) nach einem der vorhergehenden Ansprüche, **dadurch gekennzeichnet, dass** das Hydraulikreservoir (126) wenigstens teilweise als Zapfwellengetriebesumpf (126') ausgebildet ist.

## Claims

1. PTO shaft drive (10) with a PTO shaft clutch (42), with a hydraulic supply (72), and with an hydraulically actuable piston (52) for activating a clutch disc assembly (46) of the PTO shaft clutch (42), the hydraulic supply (72) comprising a hydraulic pump (88), a hydraulic reservoir (126, 126') and a hydraulic cooler (104), and a first hydraulic line (90) hydraulically connecting the hydraulic pump (88) to the piston (52), and a second hydraulic line (102), which bounces off from the first hydraulic line (90), hydraulically connecting the hydraulic pump (88) to the hydraulic cooler (104), the hydraulic supply (72) comprising a third hydraulic line (106) which hydraulically connects the hydraulic cooler (104) to the clutch disc assembly (46), the clutch disc assembly (46) being hydraulically connected to the hydraulic reservoir (126, 126'), **characterized in that**, furthermore, a drive shaft (14) is contained, on which the piston (52) is mounted, the first hydraulic line (90) comprising a first hydraulic duct (62) formed at least partially in the drive shaft (14) and leading to the piston, on which the PTO shaft clutch (42) is mounted, the third hydraulic line (106) comprising a second hydraulic duct (74) formed at least partially in the drive shaft (14) and leading to the clutch disc assembly.

2. PTO shaft drive (10) according to Claim 1, **characterized in that** a first hydraulic valve (92) for controlling a hydraulic supply of the piston (52) is arranged in the first hydraulic line (90) and a second hydraulic valve (108) is arranged in the second hydraulic line (102).

3. PTO shaft drive (10) according to Claim 2, **characterized in that** the second hydraulic valve (108) is designed as a pressure-limiting valve which is brought into the opening position (116) when a stipulatable hydraulic pressure is reached.

4. PTO shaft drive (10) according to one of Claims 1 to 3, **characterized in that** the first hydraulic valve (92) is designed as an electromagnetically actuable 4/2-way proportional valve.

5. PTO shaft drive (10) according to one of Claims 1 to 4, **characterized in that** the second hydraulic duct (74) is formed at least partially in the PTO shaft clutch (42) and, starting from the drive shaft (14), leads in a plurality of arranged subducts (80, 82, 84) to the clutch disc assembly (46).

6. PTO shaft drive (10) according to one of the preceding claims, **characterized in that** the hydraulic reservoir (126) is designed at least partially as a PTO shaft drive sump (126').

## Revendications

1. Engrenage d'arbre de prise de force (10) comprenant un embrayage d'arbre de prise de force (42), une alimentation en fluide hydraulique (72), un piston à commande hydraulique (52) pour activer un paquet de disques d'embrayage (46) de l'embrayage d'arbre de prise de force (42), dans lequel l'alimentation en fluide hydraulique (72) comprend une pompe hydraulique (88), un réservoir de fluide hydraulique (126, 126') et un refroidisseur de fluide hydraulique (104) et dans lequel une première conduite hydraulique (90) relie hydrauliquement la pompe hydraulique (88) au piston (52) et une deuxième conduite hydraulique (102) partant de la première conduite hydraulique (90) relie hydrauliquement la pompe hydraulique (88) au refroidisseur de fluide hydraulique (104), dans lequel l'alimentation en fluide hydraulique (72) comprend une troisième conduite hydraulique (106), laquelle relie hydrauliquement le refroidisseur de fluide hydraulique (104) au paquet de disques d'embrayage (46), dans lequel le paquet de disques d'embrayage (46) est en liaison hydraulique avec le réservoir de fluide hydraulique (126, 126'), **caractérisé en ce qu'**en outre un arbre d'entraînement (14) est prévu, sur lequel est monté le piston (52), la première conduite hydraulique (90) comprenant un premier canal hydraulique (62) réalisé au moins en partie dans l'arbre d'entraînement (14) et conduisant jusqu'au piston, et sur lequel est monté l'embrayage d'arbre de prise de force (42), la troisième conduite hydraulique (106) comprenant un deuxième canal hydraulique (74) réalisé au moins en partie dans l'arbre d'entraînement (14) et conduisant jusqu'au paquet de disques d'embrayage.

2. Engrenage d'arbre de prise de force (10) selon la revendication 1, **caractérisé en ce qu'**une première soupape hydraulique (92) est disposée dans la première conduite hydraulique (90) pour commander une alimentation en fluide hydraulique du piston (52) et une deuxième soupape hydraulique (108) est disposée dans la deuxième conduite hydraulique (102).

3. Engrenage d'arbre de prise de force (10) selon la revendication 2, **caractérisé en ce que** la deuxième soupape hydraulique (108) est réalisée en tant que soupape de limitation de la pression, laquelle est amenée dans la position d'ouverture (116) à l'obtention d'une pression hydraulique prédéfinissable.

4. Engrenage d'arbre de prise de force (10) selon l'une quelconque des revendications 1 à 3, **caractérisé en ce que** la première soupape hydraulique (92) est réalisée sous forme de soupape proportionnelle à 4/2 voies à commande électromagnétique.

5. Engrenage d'arbre de prise de force (10) selon l'une quelconque des revendications 1 à 4, **caractérisé en ce que** le deuxième canal hydraulique (74) est réalisé au moins en partie dans l'embrayage d'arbre de prise de force (42) et conduit à partir de l'arbre d'entraînement (14) dans plusieurs canaux partiels disposés (80, 82, 84) jusqu'au paquet de disques d'embrayage (46).

6. Engrenage d'arbre de prise de force (10) selon l'une quelconque des revendications précédentes, **caractérisé en ce que** le réservoir de fluide hydraulique (126) est réalisé au moins en partie sous forme de carter d'engrenage d'arbre de prise de force (126').
